# EUROPÄISCHE PATENTSCHRIFT

(11) **EP 3 117 702 B1**
(45) Veröffentlichungstag und Bekanntmachung des Hinweises auf die Patenterteilung: **13.09.2017**
(21) Anmeldenummer: 15176573.2
(22) Anmeldetag: 14.07.2015
(51) Int. Cl.: A01G 13/02

(54) **PFLANZTUNNELELEMENT ZUM ABDECKEN VON PFLANZEN**
PLANT TUNNEL ELEMENT FOR COVERING PLANTS
ÉLEMENT DE TUNNEL POUR PLANTES POUR RECOUVRIR DES PLANTES

(43) Veröffentlichungstag der Anmeldung: 18.01.2017
(73) Patentinhaber: Otto Graf GmbH Kunststofferzeugnisse, 79331 Teningen (DE)
(72) Erfinder:
(74) Vertreter: Grünecker Patent- und Rechtsanwälte PartG mbB

(56) Entgegenhaltungen:
- WO-A1-2007/048905
- DE-A1-102004 004 675
- FR-A1- 2 857 561
- GB-A- 1 236 231
- GB-A- 1 497 940

## Beschreibung

Die Erfindung betrifft ein Pflanztunnelelement zum Abdecken von Pflanzen, ein Pflanztunnelsystem mit mindestens zwei Pflanztunnelelementen sowie ein Verfahren zum Belüften von zwei miteinander verbundenen Pflanztunnelelementen gemäß den Oberbegriffen der Ansprüche 1, 10 und 15.

Zur Aufzucht von Pflanzen und Gemüse werden sogenannte Gartenpflanzhilfen wie Pflanztunnel oder Pflanzglocken verwendet. Pflanztunnel sind beispielsweise bereits aus der FR 2 857 561 bekannt. Das in den Pflanztunneln entstehende natürliche Kleinklima sorgt für ein optimales Wachstum der Pflanzen. Um größere Bereiche abzudecken, können Tunnelelemente in beliebiger Anzahl durch einfaches Zusammenstecken aneinandergereiht und somit individuell angepasst werden. Mit Endkappen können die Front- und Rückenseiten des Pflanztunnels verschlossen werden und mit Bodenankern im Boden fixiert werden. Somit kann für die Pflanzen auf einfache Art und Weise ein Minigewächshaus bereitgestellt werden.

Die Pflanzen in dem Minigewächshaus müssen jedoch zumindest zeitweise von außen belüftet werden. Die bekannten Lösungen, wie beispielsweise Klappen in der Tunneloberfläche oder seitliches Schrägstellen der Tunnel mittels Bodenanker, sind entweder aufwändig oder instabil und erlauben keine ausreichende Zirkulation der Luft im Inneren des Pflanztunnelelements.

Hiervon ausgehend liegt der vorliegenden Erfindung die Aufgabe zugrunde, ein Pflanztunnelelement, ein entsprechendes Pflanztunnelsystem sowie ein Verfahren bereitzustellen, die ermöglichen, dass aneinandergereihte Pflanztunnelelemente auf einfache, stabile und kostengünstige Art und Weise belüftet werden können, wobei gleichzeitig eine gute Luftzirkulation im Inneren der Pflanztunnelelemente gewährleistet wird.

Erfindungsgemäß wird diese Aufgabe durch die kennzeichnenden Merkmale der Ansprüche 1, 10 und 15 gelöst.

Das erfindungsgemäße Pflanztunnelelement dient zum Abdecken von Pflanzen und ist an mindestens einem Endbereich mit einem weiteren Pflanztunnelelement verbindbar. Im Vergleich zum Stand der Technik werden nun die Pflanztunnelelemente nicht nur einfach zusammengesteckt, sondern an einem ersten Endbereich des Pflanztunnelelements ist ein erstes Verbindungselement angeordnet, über das das Pflanztunnelelement mit einem zweiten Verbindungselement des weiteren Pflanztunnelelements verbindbar ist und über das die Höhe des ersten Endbereichs des Pflanztunnelelements relativ zur Höhe des weiteren Pflanztunnelelements für Lüftungszwecke verstellbar d.h. in dieser Position fixierbar ist. Unter Endbereich des Pflanztunnelelements versteht man in Längsrichtung betrachtet, vorzugsweise z.B. im wesentlichen die jeweils letzten 1-10 cm, insbesondere 1- 5 cm. Im Endbereich überlappen in Reihe angeordnete Pflanztunnelelemente vorzugsweise.

Das erste Verbindungselement hat somit mehrere Funktionen. Zum Einen dient es dazu, die Pflanztunnelelemente zusätzlich zu einer möglichen Steckverbindung sicher und stabil miteinander zu verbinden und darüber hinaus dient es dazu, das Pflanztunnelelement in stabiler Art und Weise an dem ersten Endbereich in seiner Höhe relativ zum weiteren Pflanztunnelelement zu verstellen, so dass eine Belüftungsöffnung zwischen aneinandergereihten Pflanztunnelelementen erzeugt wird. Somit hat das Verbindungselement auch eine Belüftungsfunktion. Wenn das Pflanztunnelelement also eine offene Unterseite sowie offene Vorder- und Rückseiten aufweist, ergibt sich durch die Schrägstellung ein offener Bereich zwischen den Bodenkanten des Pflanztunnelelements und der Erde. Weiter wird die offene Vorderseite des Pflanztunnelelements durch Anheben und Versatz zur offenen Rückseite des weiteren Pflanztunnelelements zumindest teilweise freigelegt. Das heißt nun, dass am höchsten Punkt des schräg gestellten Pflanztunnelelements eine Belüftungsöffnung entsteht, so dass die Luft am höchsten Punkt entweichen kann. Gleichzeitig kann eine gute Luftzirkulation gewährleistet werden, da im Pflanztunnelelement die warme Luft nach oben in Richtung Öffnung steigt und gleichzeitig über die Öffnungen zwischen den Bodenkanten des Pflanztunnelelements und dem Boden nachströmen kann. Auch in dieser aufgestellten Belüftungsposition sind die Pflanztunnelelemente über die Verbindungselemente in stabiler Weise miteinander verbunden.

Über das erste Verbindungselement kann also die Position des Pflanztunnelelements relativ zum weiteren Pflanztunnelelement verstellt und vorzugsweise auch fixiert werden.

Gemäß einem bevorzugten Ausführungsbeispiel kann der erste Endbereich des Pflanztunnelelements derart angehoben werden, dass die Bodenkanten unter einem Winkel α zu den Bodenkanten des weiteren Pflanztunnelelements verlaufen, wobei α vorzugsweise in einem Bereich von 0° - 20°, insbesondere 0°-15° liegt. In dem bevorzugten Winkelbereich, kann die Größe der erzeugten Belüftungsöffnungen in stabiler Art und Weise in mehreren Stufen oder stufenlos eingestellt werden.

Vorteilhafterweise ist das erste Verbindungselement drehbar um eine Achse, die sich senkrecht zu einer Längsachse L des Pflanztunnelelements erstreckt, gelagert. Dies bringt den Vorteil mit sich, dass sich beim Anheben des ersten Endbereichs des Pflanztunnelelements das Verbindungselement in einem entsprechenden Lager derart drehen kann, dass eine korrekte Ausrichtung zum zweiten Verbindungselement aufrechterhalten werden kann.

Gemäß einem bevorzugten Ausführungsbeispiel weist das erste Verbindungselement mehrere übereinander angeordnete Rastelemente auf und die zweite Verbindungseinrichtung ebenfalls mindestens ein weiteres Rastelement, wobei bei Bewegung des ersten Verbindungselements die ersten Rastelemente und das mindestens eine zweite Rastelement ineinander einrasten, derart, dass die Position des Pflanztunnelelements relativ zum weiteren Pflanztunnelelement bzw. relativ zum Boden in mehreren Stufen einstellbar ist. Entsprechende Verbindungselemente sind einfach und kostengünstig zu fertigen und erlauben ein einfaches Verstellen der relativen Position des Pflanztunnelelements. Je näher die Rastelemente zueinander angeordnet sind, desto exakter kann die entsprechende Position des Pflanztunnelelements eingestellt werden.

Vorzugsweise sind die mehreren Rastelemente auf mindestens einem Arm angeordnet. Dieser Arm dient dann sowohl zum Verstellen als auch zum Stützen des Pflanztunnelelements. Gemäß einem bevorzugten Ausführungsbeispiel umfasst das erste Verbindungselement mindestens zwei sich gabelförmig erstreckende Arme, die über einen Steg verbunden sind, der dann vorzugsweise wieder drehbar um eine zur Längsachse senkrechte Achse gelagert ist. Die Arme können dann beispielsweise symmetrisch zu einer Mittelachse des Tunnelelements angeordnet sein und sorgen für ausreichend Stabilität und stellen sicher, dass das Pflanztunnelelement beim Anheben nicht seitlich verkippt.

Das Pflanztunnelelement weist an dem den ersten Bereich gegenüberliegenden Endbereich eine zweite Verbindungseinrichtung auf, die insbesondere mindestens ein zweites Verbindungselement aufweist, über die es mit einem dritten Pflanztunnelelement verbindbar ist. Dieses zweite Verbindungselement ist dann entsprechend dem vorab beschriebenen zweiten Verbindungselement des weiteren Pflanztunnelelements ausgebildet.

Ein Pflanztunnelsystem gemäß der vorliegenden Erfindung umfasst mindestens zwei Pflanztunnelelemente nach mindestens einem der Ansprüche 1 bis 9.

Somit können einzelne Pflanztunnelelemente in beliebiger Länge aneinandergereiht werden und bei Bedarf belüftet werden.

Vorteilhafterweise weist das Pflanztunnelsystem Endkappen für die ersten und zweiten Endbereiche auf. Die Endkappen können z.B. von oben auf den Endbereich des Pflanztunnelelements aufgeschoben oder aber eingeschoben werden. Vorteilhafterweise sind die Endkappen an die Außenkontur des Pflanztunnelelements angepasst. Die Endkappen sind insbesondere am Anfang und am Ende einer Reihe von miteinander verbundenen Pflanztunnelelementen auf- oder einschiebbar (von oben oder seitlich). Insbesondere weist die Endkappe für den ersten Endbereich eine Aussparung auf zur Aufnahme des Lagers des ersten Verbindungselements.

Vorteilhafterweise sind die Pflanztunnelelemente derart ausgebildet, dass sie an ihren Endbereichen zusammensteckbar sind, d.h. insbesondere formschlüssig verbunden werden können, wobei insbesondere der erste Endbereich von oben auf den zweiten Endbereich aufgeschoben werden kann und wobei insbesondere der zweite Endbereich in den ersten Endbereich einsteckbar ist. Dies ist insbesondere deshalb vorteilhaft, da dann das erste Verbindungselement über Öffnungen in dem weiteren Pflanztunnelelement einschiebbar ist, d.h., dass der erste Endbereich oberhalb des zweiten Endbereichs liegt, und somit angehoben werden kann oder auf den zweiten Endbereich aufgeschoben werden kann. Die Öffnungen in denen beispielsweise die Arme der ersten Verbindungseinrichtung eingeführt sind dienen dann als Führung und erhöhen die Stabilität.

Beim Anheben und Schrägstellen eines mit einem Pflanztunnelelement verbundenen Pflanztunnelelements wird also eine Öffnung zwischen dem Pflanztunnelelement und dem weiteren Pflanztunnelelement erzeugt. Schrägstellen bedeutet hier Schrägstellen in Bezug auf den Boden bzw. zur Horizontalen.

Bei dem erfindungsgemäßen Verfahren wird also zum Belüften ein Pflanztunnelelement an seinem ersten Endbereich, an dem er mit dem weiteren Pflanztunnelelement verbunden ist, angehoben und durch das erste und zweite Verbindungselement in dieser Position - insbesondere durch eine formschlüssige Verbindung der Verbindungselemente (z.B. Rasteinrichtung) - in dieser Position gehalten.

Die Erfindung wird nachfolgend unter Bezugnahme folgender Figuren näher erläutert.
- Fig. 1: zeigt in perspektivischer Darstellung ein Pflanztunnelelement gemäß der vorliegenden Erfindung,
- Fig. 2: zeigt eine Draufsicht auf das in Fig. 1 gezeigte Pflanztunnelelement,
- Fig. 3: zeigt eine perspektivische Ansicht des in Fig. 1 gezeigten Pflanztunnelelements von unten,
- Fig. 4: zeigt grob schematisch eine seitliche Ansicht von zwei verbundenen Pflanztunnelelementen in einer Belüftungsstellung gemäß der vorliegenden Erfindung,
- Fig. 5: zeigt eine seitliche Ansicht von zwei miteinander verbundenen Pflanztunnelelementen gemäß der vorliegenden Erfindung,
- Fig. 6: zeigt die in Fig. 5 gezeigten Pflanztunnelelemente in einer Belüftungsposition,
- Fig. 7: zeigt grob schematisch ein erstes Verbindungselement gemäß der vorliegenden Erfindung,
- Fig. 8: zeigt perspektivisch die Endbereiche von zwei miteinander verbundenen Pflanztunnelelementen in einer Belüftungsposition,
- Fig. 9: zeigt in perspektivischer Darstellung die verbundenen ersten und zweiten Verbindungselemente gemäß der vorliegenden Erfindung,

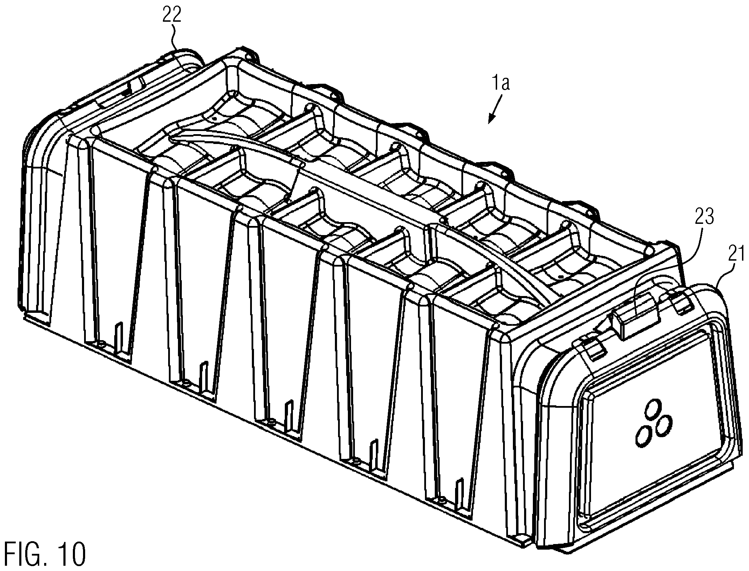

- Fig. 10: zeigt in perspektivischer Darstellung ein erfindungsgemäßes Pflanztunnelelement mit Endkappen,
- Fig. 11: zeigt in perspektivischer Darstellung eine Endkappe gemäß der vorliegenden Erfindung,

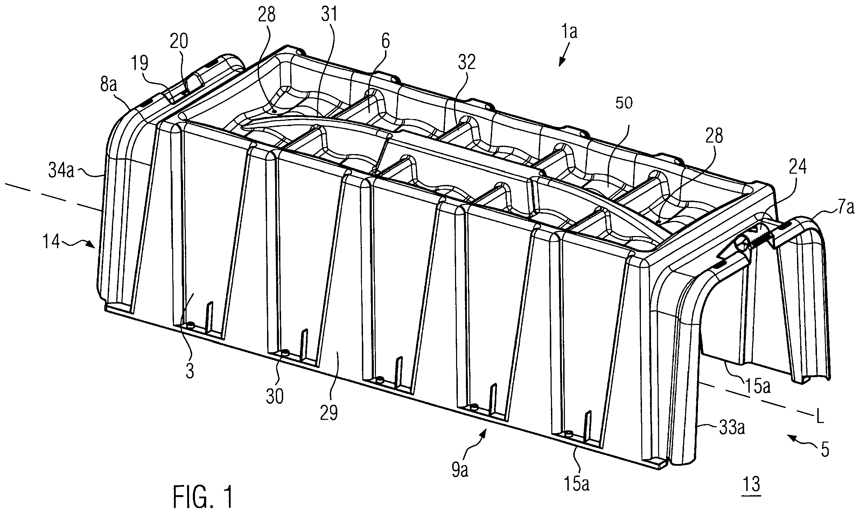

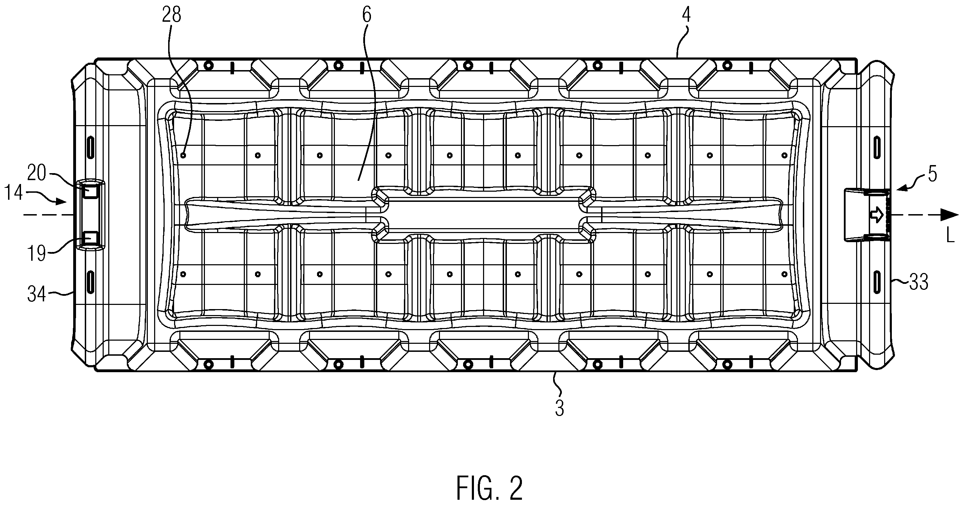

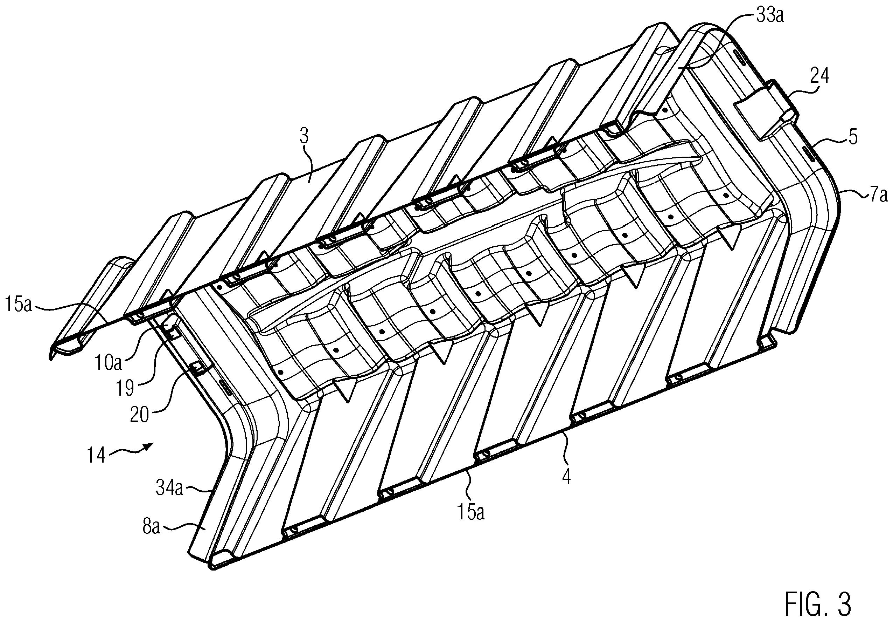

Fig. 1 bis 3 zeigen ein Pflanztunnelelement gemäß der vorliegenden Erfindung. Wie aus den Fig. 1 bis 3 zu erkennen ist, weist das Pflanztunnelelement 1a eine obere Wand 6 sowie zwei sich seitlich daran anschließende Seitenwände 3 und 4 auf. Das Pflanztunnelelement 1a weist hier einen im wesentlichen U-förmigen Querschnitt auf, könnte jedoch auch beispielsweise eine V - förmige Querschnittsform haben. Das Pflanztunneielement 1a hat dabei eine offene Unterseite 9a und steht mit den Bodenkanten 15, d.h. mit den Unterseiten der Seitenwände 3, 4 auf dem Boden 13. Die Vorderseite 5 und die Rückseite 14 des Pflanztunnelelements sind dabei ebenfalls offen und jeweils durch entsprechende Kanten 33a und 34a begrenzt.

In diesem konkreten Ausführungsbeispiel weist das Pflanztunnelelement einen Mittelsteg 31 auf, sowie mehrere sich erhebende Querstreben 32, hier vier Stück. Darüber hinaus weist das Pflanztunnelelement gewellte Vertiefungen bzw. Mulden 50 auf, hier z.B. zehn Stück, die jeweils mehrere Bewässerungsöffnungen 28, hier z.B. zwei, aufweisen. Für die seitliche Stapelstruktur sind mehrere Stapelrippen 29, hier z.B. jeweils sechs, vorgesehen.

Das Pflanztunnelelement ist aus transparentem Kunststoff gebildet, wobei die Oberfläche eine raue Struktur aufweisen kann, so dass der Artikel matt erscheint. Das Pflanztunnelelement kann beispielsweise eine Länge in einem Bereich von 800 bis 1200 mm, eine Breite in einem Bereich von 200 bis 400 mm und eine Höhe in einem Bereich von 300 bis 500 mm aufweisen. Das Pflanztunnelelement 1a weist an seiner Vorderseite 5 einen Endbereich 7a auf und an seiner Rückseite einen Endbereich 8a. Der erste Endbereich 7a ist derart gestaltet, dass ein zweiter Endbereich 8a eines weiteren Pflanztunnelelements 1b in dem Endbereich 7a eingesteckt werden kann, bzw. der Endbereich 7a auf den Endbereich 8b aufgeschoben werden kann. In dem Endbereich 7a ist, wie in Fig. 1 gezeigt, ein Lager 24 vorgesehen, in dem ein erstes Verbindungselement 2a drehbar gelagert werden kann. Das Verbindungselement ist in den Fig. 1-3 nicht dargestellt und wird nachfolgend näher erläutert. Im zweiten Endbereich 8a sind in der oberen Wand 6 zwei Öffnungen 19, 20 vorgesehen, durch die das erste Verbindungselement 2 eingeschoben werden kann.

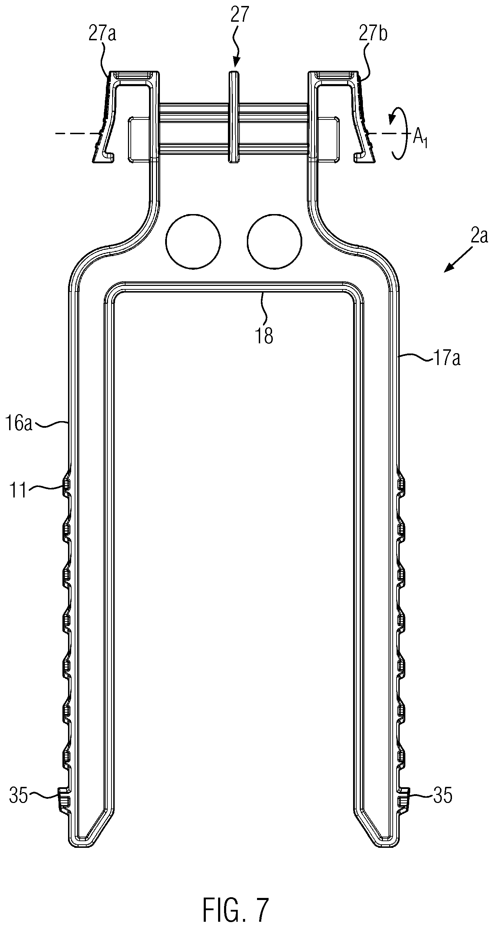

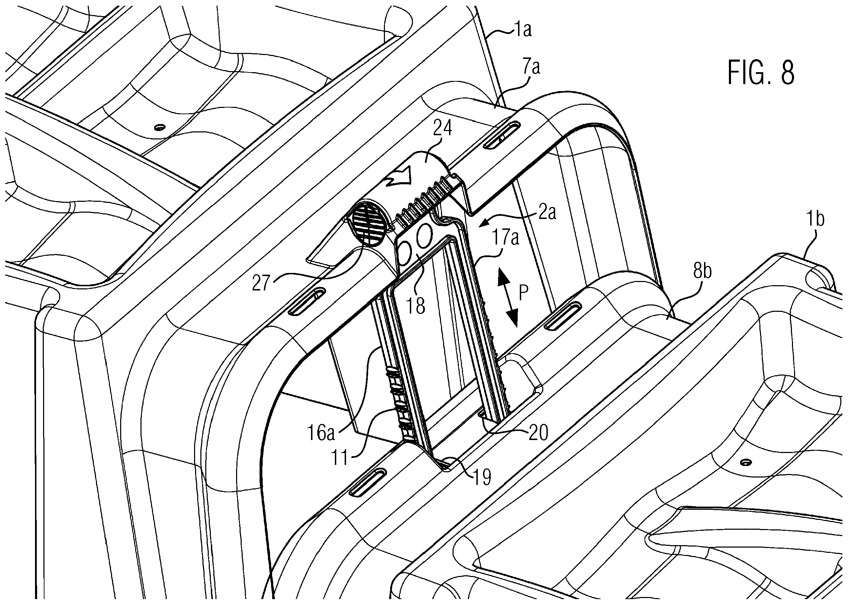

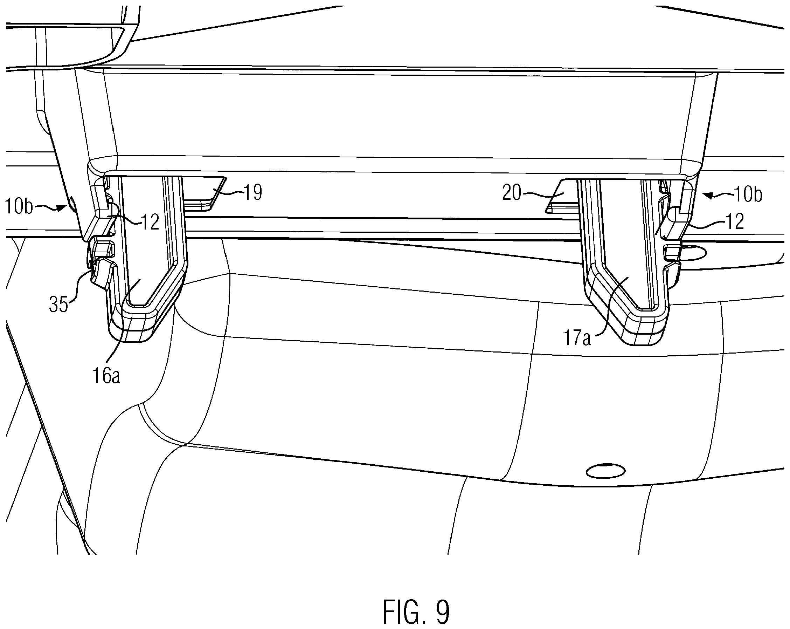

Fig. 7 zeigt das erste Verbindungselement 2a in größerem Detail. Das erste Verbindungselement 2a weist hier zwei sich gabelförmig erstreckende Arme 16a, 17a auf, an denen mehrere sich erhebende Rastelemente 11 angeordnet sind. Die Rastelemente 11 sind hier gleichmäßig voneinander beabstandet übereinander angeordnet. Am unteren Ende eines jeweiligen Arms kann ein Stoppelement 35 vorgesehen sein, das ein größere Höhe in Bezug auf die Armoberfläche aufweist als die anderen Rastelemente 11, und das verhindert, dass beispielsweise das Verbindungselement 2a vollständig aus einem zweiten Verbindungselement 10b (siehe Fig.9) herausgezogen werden kann. Die beiden Arme 16a, 17a sind über einen Steg 18 miteinander verbunden, dessen oberer Bereich 27 in einem Lager 24, hier eine Aussparung, drehbar gelagert wird. Um das erste Verbindungselement 2a an dem Pflanztunnelelement 1a bzw. in dem Lager 24 befestigen zu können, sind zumindest die Seitenbereiche 27a, 27b federelastisch ausgebildet. Wesentlich ist, dass das erste Verbindungselement 1a um eine Achse A1 drehbar gelagert ist, die sich senkrecht zur Längsachse L des Pflanztunnelelements erstreckt bzw. parallel zu einer Ebene liegt, die durch die Bodenkanten 15 aufgespannt wird. Wie insbesondere aus der Fig. 8 hervorgeht, können die beiden Arme 16a, 17a des Pflanztunnelelements 1a in entsprechende Öffnungen 19, 20 im Endbereich 7b des zweiten Pflanztunnelelements 1b eingeschoben werden. Im Inneren des zweiten Pflanztunnelelements befindet sich das zweite Verbindungselement 10b, wie aus Fig. 9 hervorgeht. In diesem Ausführungsbeispiel befindet sich das zweite Verbindungselement direkt unterhalb der Öffnungen 19 und 20. Das zweite Verbindungselement 10b umfasst ein zweites Rastelement 12, das sich hier in Form einer Rastnase in Richtung Arme 16a, 17a erstreckt. Das Rastelement 12 kann zwischen den Rastelementen 11 einrasten, so dass das erste Verbindungselement 2a, d.h. hier die Gabel 16a, 17a, 18 in einer bestimmten Position fixiert werden kann. Wie durch den Pfeil P in Fig. 8 dargestellt ist, kann das erste Verbindungselement 2a zusammen mit dem Endbereich des Pflanztunnelelements 1a auf und ab bewegt werden und somit an verschiedenen Positionen einrasten. Die Rastelemente 11 erheben sich von der Oberfläche des Verbindungselements, beispielsweise der Arme, und weisen schräg aufeinander zulaufende Außenflächen auf, derart, dass das Rastelement 12 in beide Bewegungsrichtungen gut über die Rastelemente 11 gleiten kann. Dadurch, dass das erste Verbindungselement 2a zwei Arme 16a, 17a aufweist, ist ein stabiles Bewegen des ersten Pflanztunnelelements in Relation zum zweiten Pflanztunnelelement 1b möglich, ohne dass die Vorrichtung seitlich verkippt.

Wie insbesondere aus Fig. 1 hervorgeht, weist also das Pflanztunnelelement 1a an seinem ersten Endbereich 7a das erste Verbindungselement 2a auf und an seinem gegenüberliegenden zweiten Endbereich ein zweites Verbindungselement 10a. Somit kann eine beliebige Anzahl von Pflanztunnelelementen aneinandergereiht werden.

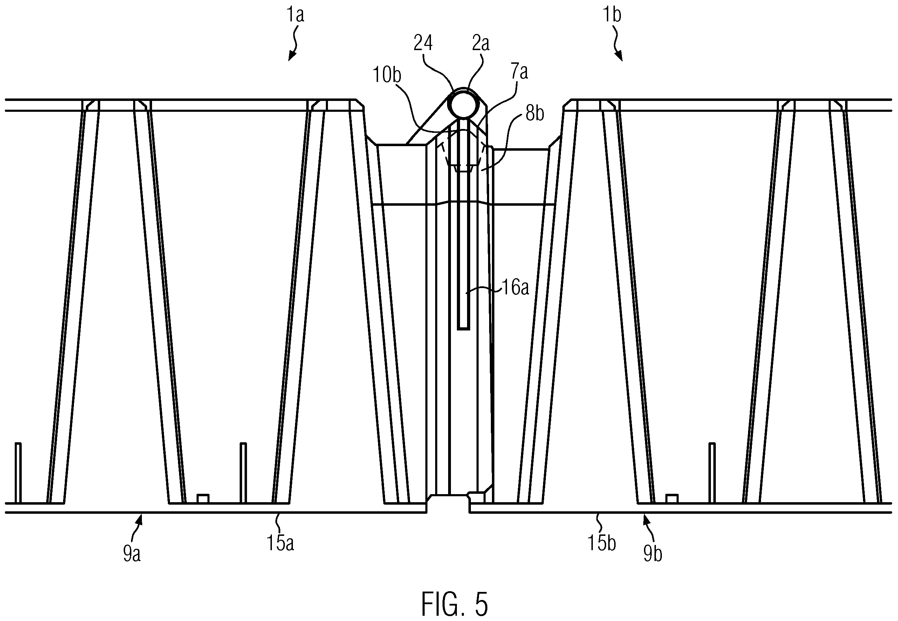

Fig. 5 zeigt nun zwei miteinander verbundene Pflanztunnelelemente 1a und 1b, wobei das erste Verbindungselement 2a durch die Öffnungen 19, 20 im zweiten Endbereich 8b des zweiten Pflanztunnelelements 1b geführt ist und der erste Endbereich 7a des ersten Pflanztunnelelements 1a den zweiten Endbereich des zweiten Pflanztunnelelements 1b überlappt. In dieser Position stehen die Bodenkanten 15a, 15b der beiden Elemente auf dem im wesentlichen horizontalen Boden 13.

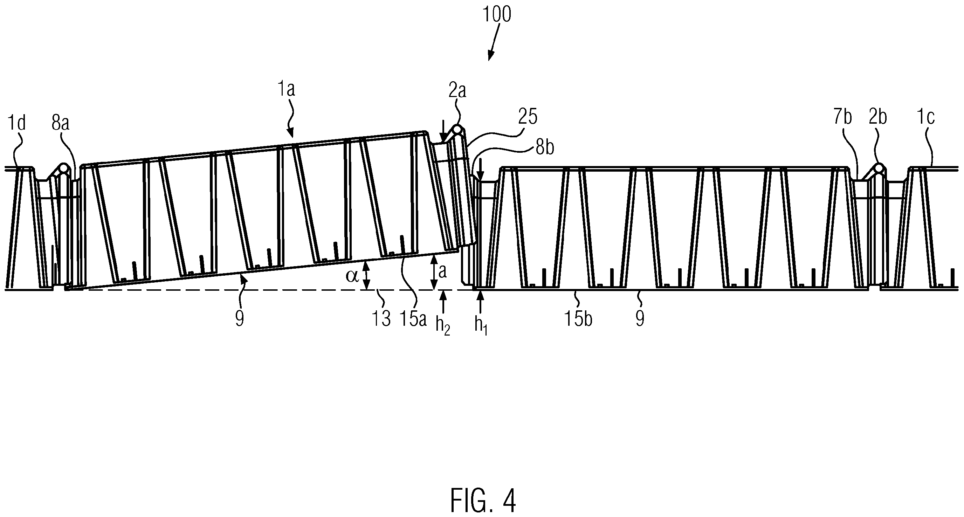

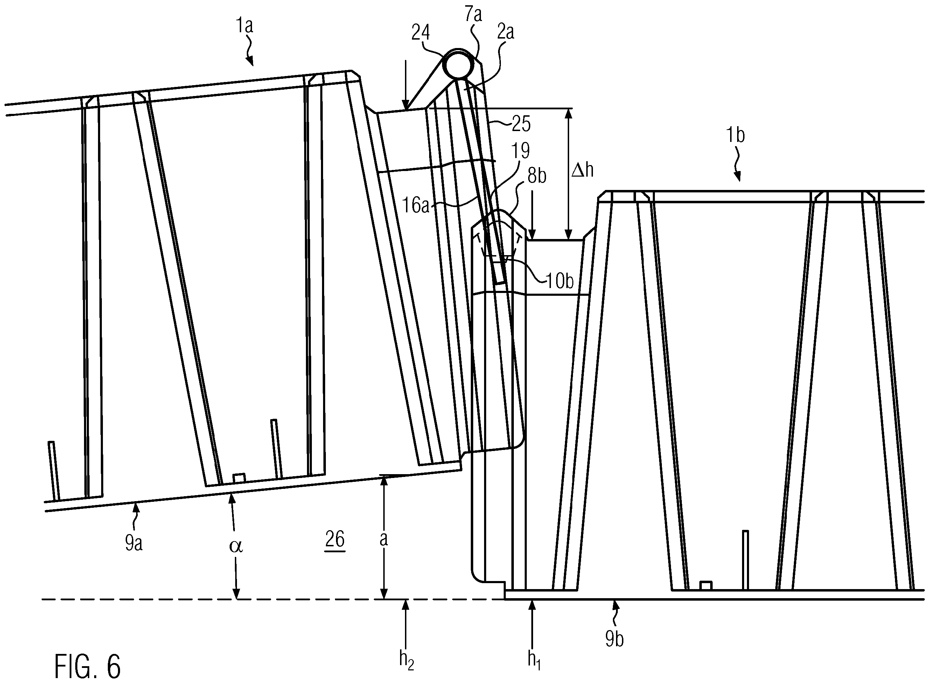

Gemäß der vorliegenden Erfindung kann nun zur Belüftung das Pflanztunnelelement 1a an seinem Endbereich 7a angehoben werden, derart, dass sich die Höhe h2 des ersten Endbereichs des Pflanztunnelelements 1a relativ zur Höhe h1 des weiteren Pflanztunnelelements 1b verstellt. Das heißt, dass die Höhe an einem Bezugspunkt , d.h., der Abstand zum Boden beispielsweise um Δh angehoben wird bzw. die Unterkante 15a an einem bestimmten Bezugspunkt um a vom Boden 13 nach oben bewegt wird, derart, dass die Bodenkanten 15a um einen Winkel α zum Boden 13, bzw. zu den Bodenkanten 15b des zweiten Pflanztunnelelements geneigt sind. Dies geht insbesondere aus den Fig. 4 und 6 hervor. Der Winkel α liegt beispielsweise in einem Bereich von 0° - 20°, vorzugsweise 0° -15 °. Beim Anheben bewegt sich das erste Verbindungselement mit seinen Armen 16a, 17a durch die Öffnungen 19, 20 nach oben und die Rastelemente 11 gleiten an dem Rastelement 12 bis zu einer gewünschten Position vorbei. In der gewünschten Position rastet dann das Rastelement 12 ein und fixiert somit die Position der Arme 16a, 17a , die wiederum das Pflanztunnelelement 1a in der angehobenen Position abstützen. Bei der Bewegung des ersten Verbindungselements 2a nach oben dreht sich gleichzeitig das Verbindungselement, hier die gabelförmigen Arme 16a, 17a in Richtung zweites Pflanztunnelelement. Durch das Anheben des ersten Pflanztunnelelements ergibt sich, wie insbesondere aus Fig. 4 und 6 hervorgeht, ein geöffneter Bereich 25, d.h., zumindest ein Teil der offenen Vorderseite 5 wird freigelegt. Durch den Abstand a der Bodenkanten 15 zum Boden 13 entsteht ebenfalls ein offener Bereich 26 zwischen Bodenkanten 15 und Boden 13 , so dass auch über diesen Bereich 26 das Innere des Pflanztunnelelements mit der Außenatmosphäre verbunden ist.

Es ist besonders vorteilhaft, dass auch in der Belüftungsposition die Pflanztunnelelemente 1a, 1b über die beiden Verbindungselemente 2a, 10b in stabiler Art und Weise verbunden sind.

Es ist ganz besonders vorteilhaft, dass die Luft in dem Pflanztunnelelement am höchsten Punkt des Pflanztunnelelements entweichen kann. Wie durch die Pfeile in Fig. 6 dargestellt ist, strömt warme Luft nach oben und kann über die Öffnung 25 das Pflanztunnelelement verlassen. Über den geöffneten Bereich 26 kann Luft von unten über die offene Unterseite 9 ins Innere nachströmen. Somit ist eine ausreichende Zirkulierung gewährleistet. Die Größe der Öffnung 25 bzw. 26 kann durch Verstellen des ersten Verbindungselements 2a relativ zum zweiten Verbindungselement 10b eingestellt werden.

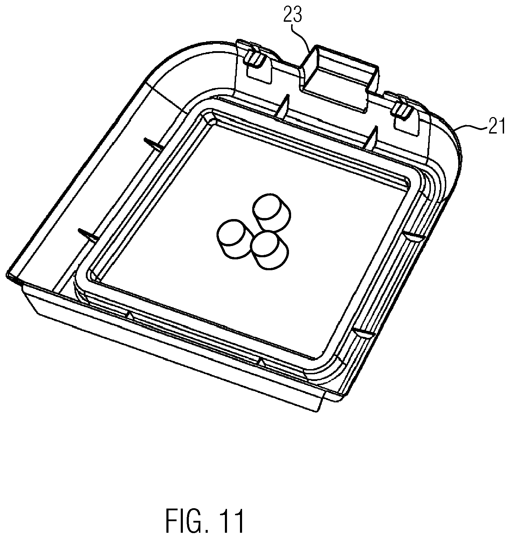

Wie in Fig. 4 dargestellt ist, können die Pflanztunnelelemente 1a, 1b an ihren entsprechend anderen Enden noch mit weiteren Pflanztunnelelementen 1d, 1c in gleicher Weise, wie zuvor beschrieben wurde, verbunden sein. Das Pflanztunnelsystem kann also mehrere Pflanztunnelelemente aufweisen, die an ihren äußeren Enden verschlossen werden können und zwar mittels entsprechender Kappen 21, 22, die beispielsweise von oben auf die Endbereiche 7a, 7b aufgeschoben werden können, und deren Kontur an die Kontur der Endbereiche angepasst ist. Dazu weist beispielsweise, wie in der Fig. 11 dargestellt ist, die Endkappe 21 für den ersten Endbereich 7a eine Aussparung 23 auf zur Aufnahme des Lagers 24 des ersten Verbindungselements 2a. Die Endkappen können über entsprechende Verbindungsmechanismen mit dem Pflanztunnelelement verbunden werden, beispielsweise mittels Steckverbindung etc..Die Endkappen können nicht nur z.B. von oben aufgeschoben werden, sondern können alternativ oder zusätzlich auch seitlich ein- oder aufgeschoben werden.

Gemäß dem erfindungsgemäßen Verfahren kann nun das Innere von mehreren aneinandergereihten Pflanztunnelelementen 1a,b,c,d, die vorzugsweise mit Endkappen 21, 22 verschlossen sind, belüftet werden. Dazu wird ein Endbereich 7a eines Pflanztunnelelements 1a manuell um eine bestimmte Höhe Δh nach oben gehoben, so dass die Unterkante 15a des Pflanztunnelelements 1a einen Abstand a zum Boden 13 aufweist und die Vorderseite 5 zumindest teilweise freigelegt wird, derart, dass sich die Öffnung 25 bildet. Dabei bewegt sich das erste Verbindungselement 2a innerhalb des zweiten Verbindungselements 10b nach oben, dreht sich dabei um die Achse A1 zum zweiten Pflanztunnelelement 1b hin, wobei dann das erste und das zweite Verbindungselement 2a, 10b an einer bestimmten gewünschten Position einrasten, so dass sich eine stabile Verbindung ergibt wodurch das Pflanztunnelelement 1a in der erhöhten Position gestützt und gehalten wird. Nun wird, wie zuvor beschrieben, der Innenraum des Pflanztunnelelements 1a belüftet.

Wenn mehrere Pflanztunnelelemente aneinandergereiht sind, können auch weitere aneinander angrenzende Pflanztunnelelemente 1d entsprechend zur Belüftung angehoben werden.

Die Pflanztunnelelemente können über Öffnungen 30 mit entsprechenden Bodenankern befestigt werden. Bei Anheben eines Pflanztunnelelements werden die Anker einfach mit aus der Erde gezogen.

Die einzelnen Pflanztunnelelemente sind platzsparend stapelbar.

## Patentansprüche

1. Pflanztunnelelement (1a) zum Abdecken von Pflanzen, das an mindestens einem Endbereich (7a) mit einem weiteren Pflanztunnelelement verbindbar ist, wobei an einem ersten Endbereich (7a) des Pflanztunnelelements (1a) ein erstes Verbindungselement (2a) angeordnet ist, über das
das Pflanztunnelelement (1a) mit einem zweiten Verbindungselement (10b) des weiteren Pflanztunnelelements (1b) verbindbar ist, **dadurch gekennzeichnet, dass** über das erste Verbindungselement (2a) die Höhe (h2) des ersten Endbereichs (7a) des Pflanztunnelelements (1a) relativ zur Höhe (h1) des weiteren Pflanztunnelelements (1b) verstellbar ist.

2. Pflanztunnelelement (1a) nach Anspruch 1, **dadurch gekennzeichnet, dass** das Pflanztunnelelement (1a) eine offene Unterseite (9a), sowie eine offene Vorder- und Rückseite (5, 14) aufweist.

3. Pflanztunnelelement (1a) nach Anspruch 1 oder 2, **dadurch gekennzeichnet, dass** über das erste Verbindungselement (2a) die Position des Pflanztunnelelements (1a) relativ zum weiteren Pflanztunnelelement (1b) derart verstell- und fixierbar ist, dass der erste Endbereich (7a) des Pflanztunnelelements (1a) angehoben werden kann, derart, dass die Bodenkanten (15a) des Pflanztunnelelements unter einem Winkel α geneigt zu den Bodenkanten (15b) des weiteren Pflanztunnelelements verlaufen, wobei α vorzugsweise in einem Bereich von 0° - 20°, insbesondere 0°-15° liegt.

4. Pflanztunnelelement (1a) nach mindestens einem der Ansprüche 1-3, **dadurch gekennzeichnet, dass** das erste Verbindungselement (2a) drehbar um eine Achse (A1), die sich senkrecht zu einer Längsachse (L) des Pflanztunnelelements (1a) erstreckt, gelagert ist.

5. Pflanztunnelelement (1a) nach mindestens einem der Ansprüche 1-4, **dadurch gekennzeichnet, dass** das erste Verbindungselement (1a) mehrere übereinander angeordnete erste Rastelemente (11) aufweist, und das zweite Verbindungselement (10b) mindestens ein zweites Rastelement (12) umfasst, wobei bei Bewegung des ersten Verbindungselements (2a) relativ zum zweiten Verbindungselement (10b) die ersten Rastelemente (11) und das mindestens eine zweite Rasterelement (12) ineinander einrasten.

6. Pflanztunnelelement (1a) nach Anspruch 5, **dadurch gekennzeichnet, dass** die mehreren ersten Rastelemente (11) auf mindestens einem Arm (16a, 17a) angeordnet sind.

7. Pflanztunnelelement (1a) nach mindestens einem der vorherigen Ansprüche, **dadurch gekennzeichnet, dass** das erste Verbindungselement (2a) mindestens zwei sich gabelförmig erstreckende Arme (16, 17) umfasst, die über einen Steg (18) verbunden sind, der drehbar um eine zur Längsachse (L) des Pflanztunnelelements senkrecht verlaufende Achse (A1) gelagert ist.

8. Pflanztunnelelement (1a) nach mindestens einem der Ansprüche 1-7, **dadurch gekennzeichnet, dass** an dem dem ersten Endereich (7a) gegenüberliegenden zweiten Endbereich (8a) eine zweite Verbindungseinrichtung (10a) angeordnet ist, die insbesondere mindestens ein zweites Rastelement (12) aufweist, wobei über die zweite Verbindungseinrichtung (10a) das Pflanztunnelelement (1a) mit einem dritten Pflanztunnelelement (1d) verbindbar ist.

9. Pflanztunnelelement nach mindestens einem der Ansprüche 1-8, **dadurch gekennzeichnet, dass** in dem zweiten Endbereich mindestens eine Öffnung (19, 20) ausgebildet ist, in die das erste Verbindungselement (2d), insbesondere der mindestens eine Arm (16, 17) des dritten Pflanztunnelelements (1d) einschiebbar ist.

10. Pflanztunnelsystem (100) mit mindestens zwei Pflanztunnelelementen (1a,b,c,d) nach mindestens einem der Ansprüche 1-9, die miteinander verbindbar sind.

11. Pflanztunnelsystem (100) nach Anspruch 10, **dadurch gekennzeichnet, dass** das Pflanztunnelsystem (100) entsprechende auf die ersten oder zweiten Endbereiche (7a,b, 8a,b) der Pflanztunnelelemente (1a,b,c,d,) aufschiebbare oder einschiebbare Endkappen (21, 22) umfasst, die insbesondere am Anfang und am Ende einer Reihe von miteinander verbundenen Pflanztunnelelementen auf- oder einschiebbar sind.

12. Pflanztunnelsystem (100) nach Anspruch 11, **dadurch gekennzeichnet, dass** die Endkappe (21) für den ersten Endbereich (7a) eine Aussparung (23) zur Aufnahme eines Lagers (24) des ersten Verbindungelements (2a) umfasst.

13. Pflanztunnelsystem (100) nach mindestens einem der Ansprüche 10-12, **dadurch gekennzeichnet, dass** die Pflanztunnelelemente (1a,b) derart ausgebildet sind, dass sie an ihren Endbereichen (7a,b, 8a,b) zusammensteckbar sind, insbesondere der zweite Endbereich (8a,b) in den ersten Endbereich (7a,b) einsteckbar ist.

14. Pflanztunnelsystem (100) nach mindestens einem der Ansprüche 10-13, **dadurch gekennzeichnet, dass** beim Anheben und Schrägstellen eines mit einem weiteren Pflanztunnelelement (1b) verbundenen Pflanztunnelelements (1a) eine Lüftung oder Öffnung (25) zwischen den Pflanztunnelelementen entsteht.

15. Verfahren zum Belüften von zwei miteinander verbundenen Pflanztunnelelementen eines Pflanztunnelsystems (100) nach mindestens einem der Ansprüche 10 bis 14, **dadurch gekennzeichnet, dass**
das Pflanztunnelelement (1a) zur Belüftung an seinem ersten Endbereich (7a), an dem es mit dem weiteren Pflanztunnelelement (1b) verbunden ist, angehoben wird, wobei sich das erste Verbindungselement (2a) relativ zum zweiten Verbindungselement (10b) bewegt, und
das angehobene Pflanztunnelelement (1a) durch das erste und zweite Verbindungselement (2a,10b) in dieser Position gehalten wird.

## Claims

1. Plant tunnel element (1a) for covering plants, which is connectable on at least one end portion (7a) to a further plant tunnel element, wherein
on a first end portion (7a) of the plant tunnel element (1a) a first connection element (2a) is arranged through which the plant tunnel element (1a) is connectable to a second connection element (10b) of the further plant tunnel element (1b), **characterized in that** through the first connection element (2a) the height (h2) of the first end portion (7a) of the plant tunnel element (1a) is adjustable relative to the height (h1) of the further plant tunnel element (1b).

2. Plant tunnel element (1a) according to claim 1, **characterized in that** the plant tunnel element (1a) has an open underside (9a) and an open front and rear side (5, 14).

3. Plant tunnel element (1a) according to claim 1 or 2, **characterized in that** through the first connection element (2a) the position of the plant tunnel element (1a) is adjustable and fixable relative to the further plant tunnel element (1b) in such a manner that the first end portion (7a) of the plant tunnel element (1a) can be lifted such that the bottom edges (15a) of the plant tunnel element extend at an angle α inclined to the bottom edges (15b) of the further plant tunnel element, wherein α, is preferably in a range of 0°-20°, particularly 0°-15°.

4. Plant tunnel element (1a) according to at least one of claims 1 to 3, **characterized in that** the first connection element (2a) is supported to be rotatable about an axis (A1) which extends in a direction perpendicular to a longitudinal axis (L) of the plant tunnel element (1a).

5. Plant tunnel element (1a) according to at least one of claims 1 to 4, **characterized in that** the first connection element (1a) comprises a plurality of first locking elements (11) arranged one above the other, and the second connection element (10b) comprises at least one second locking element (12), wherein upon movement of the first connection element (2a) relative to the second connection element (10b) the first locking elements (11) and the at least one second locking element (12) lock into one another.

6. Plant tunnel element (1a) according to claim 5, **characterized in that** the plurality of first locking elements (11) are arranged on at least one arm (16a, 17a).

7. Plant tunnel element (1a) according to at least one of the preceding claims, **characterized in that** the first connection element (2a) comprises at least two arms (16, 17) extending in forked fashion, which are connected via a web (18) which is supported to be rotatable about an axis (A1) extending perpendicular to the longitudinal axis (L) of the plant tunnel element.

8. Plant tunnel element (1a) according to at least one of claims 1 to 7, **characterized in that** a second connection means (10) that particularly comprises at least one second locking element (12) is arranged on the second end portion (8a) that is opposite the first end portion (7a), wherein the plant tunnel element (1a) is connectable to a third plant tunnel element (1d) via the second connection element (10a).

9. Plant tunnel element according to at least one of claims 1 to 8, **characterized in that** the second end portion has formed therein at least one opening (19, 20) into which the first connection element (2d), particularly the at least one arm (16, 17) of the third plant tunnel element (1d), can be slipped.

10. Plant tunnel system (100) comprising at least two plant tunnel elements (1a,b,c,d) according to at least one of claims 1 to 9, said plant tunnel elements being connectable to each other.

11. Plant tunnel system (100) according to claim 10, **characterized in that** the plant tunnel system (100) comprises corresponding end caps (21, 22) which can be slipped onto or into the first or second end portions (7a,b, 8a,b) of the plant tunnel elements (1a,b,c,d) and which can be slipped on or in particularly at the beginning and at the end of a row of interconnectable plant tunnel elements.

12. Plant tunnel system (100) according to claim 11, **characterized in that** the end cap (21) for the first end portion (7a) comprises a recess (23) for receiving a bearing (24) of the first connection element (2a).

13. Plant tunnel system (100) according to at least one of claims 10 to 12, **characterized in that** the plant tunnel elements (1a, b) are configured such that they can be plugged together on their end portions (7a,b, 8a,b), particularly the second end portion (8a,b) can be plugged into the first end portion (7a,b).

14. Plant tunnel system (100) according to at least one of claims 10 to 13, **characterized in that** upon lifting and inclining of a plant tunnel element (1a) connected to a further plant tunnel element (1b) a ventilation or opening (25) is created between the plant tunnel elements.

15. Method for ventilating two interconnected plant tunnel elements of a plant tunnel system (100) according to at least one of claims 10 to 14, **characterized in that**
the plant tunnel element (1a) is lifted for ventilation at its first end portion (7a) at which it is connected to the further plant tunnel element (1b), wherein the first connection element (2a) moves relative to the second connection element (10b), and
the lifted plant tunnel element (1a) is held by the first and second connection element (2a, 10b) in this position.

## Revendications

1. Élément de tunnel pour plantes (1a) destiné à recouvrir des plantes et pouvant être relié au niveau d'au moins une zone d'extrémité (7a) à un autre élément de tunnel pour plantes ;
dans une première zone d'extrémité (7a) de l'élément de tunnel pour plantes (1a) se trouve un premier élément de raccordement (2a), par le biais duquel
l'élément de tunnel pour plantes (1a) peut être relié à un deuxième élément de raccordement (10b) de l'autre élément de tunnel pour plantes (1b) ; cet élément de tunnel pour plantes (1a) est **caractérisé en ce que** le premier élément de raccordement (2a) permet de régler la hauteur (h2) de la première zone d'extrémité (7a) de l'élément de tunnel pour plantes (1a) par rapport à la hauteur (h1) de l'autre élément de tunnel pour plantes (1b).

2. Élément de tunnel pour plantes (1a),
selon la revendication 1, **caractérisé en ce que** l'élément de tunnel pour plantes (1a) présente un côté inférieur ouvert (9a), ainsi qu'un côté avant et un côté arrière ouverts (5, 14).

3. Élément de tunnel pour plantes (1a), selon la revendication 1 ou 2, **caractérisé en ce que** le premier élément de raccordement (2a) permet de régler et de fixer la position de l'élément de tunnel pour plantes (1a) par rapport à l'autre élément de tunnel pour plantes (1b) de telle manière que la première zone d'extrémité (7a) de l'élément de tunnel pour plantes (1a) peut être relevée, afin que les bords inférieurs (15a) de l'élément de tunnel pour plantes s'étendent avec un angle d'inclinaison α par rapport aux bords inférieurs (15b) de l'autre élément de tunnel pour plantes, α se situant de préférence dans une plage de 0° à 20°, et plus particulièrement dans une plage de 0° à 15°.

4. Élément de tunnel pour plantes (1a), selon au moins l'une des revendications 1 à 3, **caractérisé en ce que** le premier élément de raccordement (2a) est logé de façon rotative autour d'un axe (A1) qui s'étend perpendiculairement à un axe longitudinal (L) de l'élément de tunnel pour plantes (1a).

5. Élément de tunnel pour plantes (1a), selon au moins l'une des revendications 1 à 4, **caractérisé en ce que** le premier élément de raccordement (1a) présente plusieurs premiers éléments d'enclenchement (11) disposés les uns au-dessus des autres et **en ce que** le deuxième élément de raccordement (10b) présente au moins un deuxième élément d'enclenchement (12) ; en cas de déplacement du premier élément de raccordement (2a) par rapport au deuxième élément de raccordement (10b), les premiers éléments d'enclenchement (11) et le deuxième élément d'enclenchement (12) - au nombre d'une unité au moins - s'enclenchent les uns dans les autres.

6. Élément de tunnel pour plantes (1a), selon la revendication 5, **caractérisé en ce que** les multiples premiers éléments d'enclenchement (11) sont disposés sur au moins un bras (16a, 17a).

7. Élément de tunnel pour plantes (1a), selon au moins l'une des revendications précédentes, **caractérisé en ce que** le premier élément de raccordement (2a) comprend au moins deux bras (16, 17) s'étendant en forme de fourche qui sont reliés entre eux par le biais d'une entretoise (18) qui est logée de manière rotative autour d'un axe (A1) perpendiculaire à l'axe longitudinal (L) de l'élément de tunnel pour plantes.

8. Élément de tunnel pour plantes (1a), selon au moins l'une des revendications 1 à 7, **caractérisé en ce qu'**un deuxième dispositif de raccordement (10a) se trouve sur la deuxième zone d'extrémité située à l'opposée de la première zone d'extrémité (7a), ce deuxième dispositif de raccordement (10a) présentant en particulier au moins un deuxième élément d'enclenchement (12) ; l'élément de tunnel pour plantes (1a) peut être relié à un troisième élément de tunnel pour plantes (1d) par le biais du deuxième dispositif de raccordement (10a).

9. Élément de tunnel pour plantes (1a), selon au moins l'une des revendications 1 à 8, **caractérisé en ce qu'**au moins une ouverture (19, 20) se trouve dans la deuxième zone d'extrémité, le premier élément de raccordement (2d), et plus particulièrement le bras (16, 17) - au nombre d'une unité au moins - du troisième élément de tunnel pour plantes (1d), pouvant être enfichés dans cette ouverture (19, 20).

10. Système de tunnel pour plantes (100) doté d'au moins deux éléments de tunnel pour plantes (1a,b,c,d), selon au moins l'une des revendications 1 à 9, qui peuvent être reliés entre eux.

11. Système de tunnel pour plantes (100), selon la revendication 10, **caractérisé en ce que** le système de tunnel pour plantes (100) comprend des embouts de fermeture correspondants (21, 22) pouvant être glissés sur ou insérés dans les premières et les deuxièmes zones d'extrémité (7a,b, 8a,b) des éléments de tunnel pour plantes ; ces embouts de fermeture (21,22) peuvent en particulier être glissés sur ou insérés dans le début et la fin d'un ensemble d'éléments de tunnel pour plantes reliés entre eux.

12. Système de tunnel pour plantes (100), selon la revendication 11, **caractérisé en ce que** l'embout de fermeture (21) présente pour la première zone d'extrémité (7a) un évidement (23) permettant le logement d'un palier (24) du premier élément de raccordement (2a).

13. Système de tunnel pour plantes (100), selon au moins l'une des revendications 10 à 12, **caractérisé en ce que** les éléments de tunnel pour plantes (1a,b) sont configurés de telle manière qu'ils peuvent être emboîtés les uns dans les autres au niveau de leurs zones d'extrémité (7a,b, 8a,b) et que notamment la deuxième zone d'extrémité (8a,b) peut être emboîtée dans la première zone d'extrémité (7a,b).

14. Système de tunnel pour plantes (100), selon au moins l'une des revendications 10 à 13, **caractérisé en ce qu'**une ventilation ou une ouverture (25) est obtenue entre les éléments de tunnel pour plantes lors du relevage et de l'inclinaison d'un élément de tunnel pour plantes (1a) relié à un autre élément de tunnel pour plantes (1b).

15. Procédé permettant la ventilation de deux éléments de tunnel pour plantes d'un système de tunnel pour plantes (100), selon au moins l'une des revendications 10 à 14, **caractérisé en ce que**
l'élément de tunnel pour plantes (1a) est soulevé pour la ventilation de sa première zone d'extrémité (7a), au niveau de laquelle il est relié à l'autre élément de tunnel pour plantes (1b) ; le premier élément de raccordement (2a) se déplace par rapport au deuxième élément de raccordement (10b), et
l'élément de tunnel pour plantes soulevé (1a) est maintenu dans cette position par le premier et le deuxième élément de raccordement (2a, 10b).
